Europäisches Patentamt

European Patent Office

Office européen des brevets

(19)

(11) Numéro de publication : **0 343 045 B1**

(12) **FASCICULE DE BREVET EUROPEEN**

(45) Date de publication du fascicule du brevet :
15.07.92 Bulletin 92/29

(51) Int. Cl.⁵ : **B01J 37/20,** C10G 49/12

(21) Numéro de dépôt : **89401312.7**

(22) Date de dépôt : **11.05.89**

(54) Composition catalytique comprenant un sulfure métallique en suspension dans un liquide contenant des asphaltènes et procédé d'hydroviscoreduction d'une charge d'hydrocarbures.

(30) Priorité : **19.05.88 FR 8806839**
**19.05.88 FR 8806840**

(43) Date de publication de la demande :
**23.11.89 Bulletin 89/47**

(45) Mention de la délivrance du brevet :
**15.07.92 Bulletin 92/29**

(84) Etats contractants désignés :
**DE FR GB IT**

(56) Documents cités :
**EP-A- 0 181 254**
**US-A- 4 048 058**
**US-A- 4 557 822**
**US-A- 4 659 453**
**US-A- 4 725 571**

(73) Titulaire : **INSTITUT FRANCAIS DU PETROLE**
**4, Avenue de Bois Préau**
**F-92502 Rueil-Malmaison (FR)**

(72) Inventeur : **Giuliani, Pierre**
**20, Boulevard du Maréchal Joffre**
**F-38000 Grenoble (FR)**
Inventeur : **le Page, Jean-François**
**13, rue des Primevères**
**F-92500 Rueil Malmaison (FR)**
Inventeur : **Plumail, Jean-Claude**
**60, rue Mac Mahon**
**F-92000 Nanterre (FR)**
Inventeur : **Espeillac, Marcellin**
**16, rue Gabriel Péri**
**F-78220 Viroflay (FR)**

EP 0 343 045 B1

Jouve, 18, rue Saint-Denis, 75001 PARIS

## Description

La présente invention concerne un procédé d'hydroviscoréduction catalytique d'une charge d'hydrocarbures en présence d'une composition catalytique comprenant au moins un métal choisi parmi les métaux des groupes VI B, VII B et VIII de la classification périodique des éléments (Handbook of chemistry and physics, 37ème édition, 1956, pages 392 - 393). Elle concerne en particulier un procédé d'hydroviscoréduction des fractions lourdes de pétrole en vue de leur conversion en fraction plus légères. De nombreux procédés de viscoréduction ou d'hydroviscoréduction de charges hydrocarbonées ont été décrits dans l'art antérieur et il est bien connu que la conversion, effectuée à haute température, est fonction des conditions opératoires. Cependant lorsque les conditions opératoires sont trop sévères (température et temps de séjour élevés) il se forme des produits instables et on risque également de former du coke.

Un moyen bien connu, de l'homme du métier, pour palier cet inconvénient est d'injecter en continu dans la charge à traiter un métal ou un composé de métal ayant dans les conditions du traitement thermique une activité hydrogénante (EP-A-181253, US-A-4655905). Le métal le plus utilisé dans ce but est le molybdène qui présente une activité hydrogénante en présence de sulfure d'hydrogène ($H_2S$).

Il est bien connu par ailleurs de l'homme du métier qu'il est avantageux d'utiliser dans les procédés de viscoréduction et/ou d'hydroviscoréduction de charges hydrocarbonées un catalyseur sous forme de sulfure. En effet la dite forme présente une activité catalytique et une stabilité supérieures à celles des autres formes utilisées et en particulier à celles des oxydes.

On sait par ailleurs qu'indépendamment de la qualité du précurseur catalytique utilisé il est souhaitable d'obtenir des catalyseurs très bien dispersés dans la charge à traiter.

On connait également le brevet US-A-4,725,571 qui dans le cadre d'hydrotraitement préconise un prétraitement de catalyseur au moyen d'un mélange de polysulfures organiques et d'une charge hydrocarbonéee ne renfermant pas d'asphaltènes. On a maintenant découvert, de façon surprenante, que l'utilisation d'une composition catalytique, qui fait également l'objet de la présente invention, comprenant au moins un sulfure d'au moins un métal choisi parmi les métaux des groupes VI B, VII B et VIII, obtenue selon une méthode particulière décrite ci-après, dans les procédés d'hydroviscoréduction catalytique de charges hydrocarbonées permet d'obtenir une conversion très élevée des fractions lourdes en fractions plus légères, sans formation excessive de coke et un améliorant simultanément la qualité des résidus (meilleur taux d'élimination du soufre des asphaltènes et des métaux).

Grâce à la conversion très élevée d'une fraction lourde en fraction plus légère sans formation excessive de coke, l'unité utilisant le procédé d'hydroviscoréduction catalytique selon l'invention pourra être en combinaisonsuivie d'une unité d'hydrodémétallisation suivie elle-même d'une unité de désulfuration, dans lesquelles la durée de vie des catalyseurs se trouve améliorée.

Le procédé d'hydroviscoréduction catalytique d'une charge d'hydrocarbures de la présente invention comprend les étapes suivantes :

a) On mélange la charge à traiter avec un gaz contenant de l'hydrogène en quantité suffisante pour effectuer la réaction d'hydroviscoréduction et on porte le mélange à une température d'au moins 330 °C,

b) On introduit dans le mélange hydrogène-charge d'hydrocarbures une quantité suffisante, pour obtenir une teneur en métaux dans la charge à traiter d'environ 10 à 2 000 ppm en poids par rapport au poids de la charge, d'une composition catalytique obtenue par une méthode qui comprend les étapes suivantes :

1) on soumet à un traitement thermique à une température de 80 à 250 °C, de préférence de 100 à 180 °C, pendant une durée de 0,1 à 24 heures, sous atmosphère globalement réductrice d'un gaz contenant de l'hydrogène (par exemple sous balayage d'hydrogène), le mélange obtenu par la mise en contact, dans un ordre quelconque, d'au moins un composé autre qu'un sulfure, d'au moins un métal choisi parmi les métaux des groupes VI B, VII B et VIII de la classification périodique des éléments avec une charge hydrocarbonée contenant des asphaltènes et avec au moins un polysulfure organique de formule $R^1 \leftarrow S \rightarrow_{n} R^2$ dans laquelle $R^1$ et $R^2$, identiques ou différents, représentent chacun un radical hydrocarboné et n est un nombre entier de 2 à 20, la quantité du composé de métal et des asphaltènes étant telle que le rapport pondéral métal sur asphaltènes soit d'environ 0,05 : 1 à 10 : 1, de préférence 0,1 : 1 à 5 : 1 et le plus souvent 0,2 : 1 à 3 : 1, et la quantité de polysulfure organique employée étant suffisante pour introduire une quantité de soufre au moins égale à la quantité de soufre nécessaire à la transformation sensiblement complète de la majeure partie de la quantité de métal présente en un composé métallique sulfuré précurseur catalytique, et,

2) on chauffe le produit issu de l'étape (1) en présence d'un gaz contenant de l'hydrogène, sous une pression partielle d'hydrogène d'environ 0,5 à 20 MPa, de préférence d'environ 1 à 15 MPa et le plus souvent d'environ 2 à 10 MPa, à une température d'environ 260 à 450 °C et de préférence d'environ

2

300 à 400 °C, pendant une durée de 0,1 à 24 heures, et

c) On soumet le produit issu de l'étape (b) à des conditions d'hydroviscoréduction pendant une durée suffisante pour effectuer l'hydroviscoréduction de la charge à traiter.

L'étape (2) de préparation de la composition catalytique employée dans le procédé de la présente invention permet de transformer le précurseur catalytique obtenu à l'étape (1) en un catalyseur hétérogène finement divisé et d'obtenir ainsi une composition catalytique particulièrement active.

Tous les métaux des groupes VI B, VII B et VIII peuvent être utilisés dans le cadre de la présente invention. A titre d'exemple on peut citer le molybdène, le tungstène, le chrome, le manganèse, le nickel et le cobalt.

De manière préférée on utilise le molybdène ou les associations molybdène-nickel et molybdène-cobalt.

Le composé de métal employé dans l'étape (1) de préparation de la composition catalytique est de préférence un oxyde, un sel d'un acide organique tel que par exemple un octoate ou un naphténate, un polyacide tel que par exemple un isopolyacide ou un hétéropolyacide ou un sel de polyacide dudit métal.

Le métal le plus souvent utilisé est le molybdène que l'on emploie habituellement sous la forme d'un composé choisi dans le groupe formé par les bleus de molybdène, l'acide phosphomolybdique, les sels de l'acide phosphomolybdique et les sels de molybdène d'acides organiques tels que par exemple l'octoate de molybdène et le naphténate de molybdène.

Le composé de métal employé dans l'étape (1) de préparation de la composition catalytique, est habituellement introduit sous forme d'une solution dans un solvant choisi dans le groupe formé par l'eau, les solvants organiques et les mélanges eau-solvant organique ou d'une émulsion dans un mélange eau-solvant organique.

Parmi les solvants organiques que l'on peut citer à titre d'exemple les hydrocarbures, les alcools, les éthers, les cétones, les esters, les amides, les phénols et les nitriles. On utilise de préférence les alcools, par exemple ceux ayant de 1 à 24 atomes de carbone dans leur molécule et en particulier des alcools ou des mélanges d'alcools ayant de 3 à 18 atomes de carbone dans leur molécule (par exemple alcool oxo, éthylhexanol ou alcool isopropylique).

On peut également utiliser un sel métallique en solution dans l'eau, puis ajouter ensuite à cette solution un solvant organique, par exemple un solvant miscible. On obtient ainsi une solution ou une émulsion du composé de métal dans un mélange eau-solvant organique. De préférence ce solvant organique comprendra au moins un alcool ayant de 3 à 18 atomes de carbone dans sa molécule.

A titre d'exemple, dans le cas du molybdène on peut utiliser de l'acide phosphomolybdique préparé à partir d'une solution aqueuse d'acide phosphorique et de trioxyde de molybdène que l'on porte à ébullition au reflux pendant au moins 10 minutes. L'acide phosphomolybdique en solution aqueuse ainsi obtenu est relativement bon marché et cette solution peut être utilisée telle quelle ou après addition d'un solvant organique.

La teneur en métal ou en métaux de la solution ou de l'émulsion employée dans l'étape (1), de préparation de la composition catalytique, pour introduire le composé de métal ou les composés de métaux est habituellement de 1 à 40 % en poids, de préférence de 10 à 30 % en poids.

La charge hydrocarbonée contenant des asphaltènes que l'on utilise est habituellement un résidu de distillation atmosphérique ou un résidu de distillation sous vide, ou un pétrole lourd contenant une proportion importante d'asphaltènes. Cette charge hydrocarbonée peut également être l'une des charges citées ci-avant mélangée à une coupe riche en composés aromatiques telles que par exemple une coupe d'un distillat léger (huiles légères de recyclage généralement appelé LCO ("Light Cycle Oil")) ou une coupe choisie parmi les huiles lourdes de recyclage généralement appelée HCO ("Heavy Cycle Oil") issue par exemple d'une unité de crackage catalytique par exemple des coupes 180 - 365 °C, 160 - 341 °C pour un LCO ou 320 - 500 °C pour un HCO issues dudit craquage.

Le mélange soumis au traitement thermique de l'étape (1), de préparation de la composition catalytique, pourra par exemple comprendre :

a) 10 à 30 % en volume de solution du composé de métal, par exemple une solution aqueuse ou une solution dans un mélange eau-solvant ou une solution dans un solvant organique, le solvant organique étant dans ces deux derniers cas de préférence un alcool ou un mélange d'alcools tel que décrit ci-avant,

b) 30 à 50 % d'une coupe hydrocarbonée contenant des asphaltènes par exemple un résidu sous vide ou un résidu atmosphérique et

c) 30 à 50 % d'une coupe riche en composés aromatiques issue d'une unité de craquage catalytique par exemple une coupe LCO 180 - 365 °C ou 160 - 341 °C.

Au sens de la présente invention on désigne par le terme asphaltène les composés de la fraction pétrolière utilisée qui sont solubles dans le benzène à sa température d'ébullition et insolubles dans le n-heptane à sa température d'ébullition.

Le polysulfure organique utilisé dans l'étape (1) de préparation de la composition catalytique est un

composé de formule $R^1 \{S\}_{\overline{n}} R^2$ dans laquelle n est un nombre entier prenant la valeur 2 à 20, de préférence 3 à 10 et le plus souvent 4 à 7, $R^1$ et $R^2$ identiques ou différents, représentent chacun un radical hydrocarboné contenant habituellement de 1 à 150 atomes de carbone, de préférence de 5 à 60 atomes de carbone, de manière la plus préférée de 5 à 40 atomes de carbone et le plus souvent de 7 à 16 atomes de carbone, $R^1$ pouvant aussi représenter un atome d'hydrogène. Parmi les radicaux hydrocarbonés on peut citer à titre d'exemple les radicaux aliphatiques saturés ou insaturés, linéaires ou ramifiés, les radicaux cycloaliphatiques et les radicaux aryles. Dans la formule ci-avant $R^1$ et $R^2$ représentent de préférence un radical alkyl linéaire ou ramifié, un radical aryle, un radical aryle-alkyle (aralkyle) ou un radical cycloalkyle par exemple naphténique. A titre d'exemple de polysulfures organiques on peut citer le ditertiododécylpolysulfure (n = 5), où $R^1$ et $R^2$ sont chacun un radical dodécyle tertiaire, commercialisé par exemple par la société ELF-AQUITAINE sous le nom TPS 32, notamment parce qu'il contient environ 32 % en poids de soufre, le ditertiononylpolysulfure (n = 5), ou $R^1$ et $R^2$ sont chacun un radical nonyle tertiaire, commercialisé par exemple par la société ELF AQUITAINE sous le nom TPS 37 et par la société PENWALT sous le nom TNPS, les oléfines polysulfurées contenant par exemple environ 30 à 70 % en poids de soufre telles que celles décrites par exemple dans le brevet US-A-3471404 ou dans la demande de brevet français au nom de la demanderesse déposée sous le numéro d'enregistrement national 86-14576 le 17 octobre 1986. La quantité de polysulfure organique employée doit être suffisante pour permettre la transformation sensiblement complète de la majeure partie de la quantité de métal présent en un composé métallique sulfuré, précurseur catalytique. L'expression "en majeure partie" signifie dans le cadre de la présente description au moins 50 %. La quantité de polysulfure organique étant de préférence choisie de manière à permettre la transformation sensiblement complète d'au moins 60 % et le plus souvent d'au moins 80 % et par exemple de la totalité de la quantité de métal présente en un composé métallique sulfuré. Cette quantité minimale, est facilement déterminable à partir du poids de métal présent et en considérant que le soufre contenu dans le polysulfure organique employé est utilisé en totalité pour former un ou des composés métalliques sulfurés.

Cette quantité est habituellement telle que l'on introduise au moins 1,5 atomes gramme (at.g) de soufre par atome-gramme de métal. Cette quantité est habituellement de 1,5 : 1 à 10 : 1 at.g de soufre pour 1 at.g de métal et de préférence de 2 : 1 à 5 : 1.

La durée de cette étape (1) de formation du précurseur catalytique métallique sulfuré doit être suffisante pour assurer la sulfuration sensiblement complète de la majeure partie de la quantité de métal présente. La durée de cette étape (1) est habituellement de 0,1 à 24 heures, le plus souvent de 0,1 à 10 heures et de façon préférée de 0,2 à 4 heures.

Cette première étape (1) de préparation de la composition catalytique utilisée dans le procédé selon l'invention est impérativement effectuée sous atmosphère globalement réductrice en présence d'un gaz contenant de l'hydrogène. Elle peut être effectuée sous pression normale ou sous une pression plus élevée par exemple jusqu'à environ 25 MPa avec une pression partielle d'hydrogène qui peut être importante par exemple jusqu'à 20 MPa. Cette étape est de préférence effectuée sous balayage de gaz, de préférence d'un gaz contenant de l'hydrogène. Le gaz contenant de l'hydrogène peut être de l'hydrogène sensiblement pur ou de l'hydrogène industriel, par exemple un gaz de recyclage de l'unité de conversion de la charge d'hydrocarbures qui contient habituellement une faible proportion d'hydrogène sulfuré ($H_2S$). La proportion d'$H_2S$ sera de préférence inférieure à 5 % en volume et le plus souvent inférieure à 3 % en volume. Le débit du gaz est habituellement choisi de manière à ce que le rapport en volume d'hydrogène sur hydrocarbures soit d'environ 50 : 1 à environ 2000 : 1.

Le produit issu de l'étape (1) de préparation de la composition catalytique est ensuite chauffé à une température d'environ 260 à 450 °C en présence d'un gaz contenant de l'hydrogène, sous une pression partielle d'hydrogène d'environ 0,5 à 20 MPa pendant une durée suffisante pour transformer le précurseur catalytique sulfuré obtenu à l'étape (1) en un catalyseur hétérogène sulfuré, finement divisé, en suspension dans la phase liquide, et obtenir ainsi la composition catalytique utilisée dans la présente invention. La durée de cette étape (2) est habituellement d'environ 0,1 à 24 heures, le plus souvent d'environ 0,1 à 10 heures, et de préférence d'environ 0,1 à 2 heures.

La composition catalytique utilisée dans la présente invention est habituellement préparée en utilisant des quantités de métaux telles que la concentration en métal dans la composition finale exprimée en poids de métal par rapport au poids total de la composition est habituellement d'environ 0,01 à 4 %, de préférence d'environ 0,1 à 2 % et le plus souvent d'environ 0,2 à 1 %.

La composition catalytique obtenue par le procédé décrit ci-avant, comprenant l'utilisation d'un polysulfure organique comme agent de sulfuration et l'emploi d'une quantité de métal dans un rapport particulier avec la quantité d'asphaltènes présente, permet d'obtenir un précurseur sulfuré très bien dispersé et ainsi une composition catalytique ou concentrat catalytique particulièrement actif dans les procédés de viscoréduction et/ou hydroviscoréduction de charges hydrocarbonées. De façon surprenante comme cela est démontré dans les exemples ci-après, les compositions catalytiques obtenues suivant l'invention par sulfuration à l'aide d'un polysulfure sont nettement plus actives que celles obtenues par sulfuration à l'aide d'hydrogène sulfuré, classiquement employé dans l'art antérieur, toutes choses égales par ailleurs.

Les charges hydrocarbonées que l'on envisage de traiter dans le procédé selon l'invention sont des charges lourdes contenant habituellement des impuretés hétéro-atomiques telles que par exemple des impuretés soufrées, azotées et/ou métalliques. Parmi ces charges on peut citer, sans que cette liste ne soit considérée comme restrictive, les résidus de distillation atmosphérique, les résidus de distillation sous vide, les pétroles bruts lourds, les huiles désasphaltées et les hydrogénats de charbon.

La présente invention concerne les procédés d'hydroviscoréduction en présence d'un catalyseur en suspension (procédés en "slurry") et en particulier un procédé d'hydroviscoréduction dans lequel on additionne à une charge d'hydrocarbures préalablement portée à une température d'au moins 330 °C, habituellement de 330 à 550 °C et de préférence de 350 à 450 °C une quantité suffisante de la composition catalytique décrite ci-avant pour obtenir une teneur en métal par rapport à la charge à traiter qui est habituellement d'environ 10 à 2000 ppm en poids, de préférence d'environ 20 à 1500 ppm et le plus souvent d'environ 25 à 500 ppm en poids et on soumet ce mélange à un traitement thermique en présence d'hydrogène dans des conditions d'hydroviscoréduction.

Dans une forme préférée du procédé d'hydrovisocréduction de la présente invention la charge d'hydrocarbures à traiter sera préalablement additionnée d'hydrogène en quantité suffisante pour effectuer l'hydroviscoréduction puis portée à la température d'au moins 330 °C, habituellement de 330 à 500 °C, de préférence de 350 à 450 °C, dans un four de préchauffage et la composition catalytique sera introduite dans la dite charge de préférence immédiatement à la sortie du four de préchauffage, le mélange étant ensuite envoyé dans le réacteur d'hydroviscoréduction et mis dans les conditions de l'hydroviscoréduction (étape (c) du procédé de la présente invention) c'est à dire habituellement une pression totale d'environ 3 à 30 MPa, de préférence de 8 à 20 MPa, un temps de séjour de la charge d'environ 5 minutes à 16 heures, de préférence d'environ 10 minutes à 4 heures, une température d'environ 350 à 500 °C, de préférence d'environ 350 à 450 °C et une quantité d'hydrogène en volume mesurée à température et pression normale par rapport à la charge d'environ 100 : 1 à 5000 : 1 et de préférence d'environ 150 : 1 à 2000 : 1.

Le procédé d'hydroviscoréduction catalytique d'une charge d'hydrocarbures peut être utilisé dans un procédé intégré d'hydrotraitement de ladite charge combinant les procédés suivants :

1/ un procédé d'hydroviscoréduction catalytique selon l'invention,

2/ un procédé d'hydrodémétallisation catalytique,

3/ un procédé d'hydrodésulfuration catalytique.

A l'issue du procédé 1/ d'hydroviscoréduction décrit précédemment, l'effluent est conduit, mélangé à de l'hydrogène, sur un catalyseur d'hydrodémétallisation comprenant un support minéral réfractaire, de l'alumine par exemple et au moins un métal sous forme libre ou combinée, de l'un au moins des groupes VB (groupe du vanadium), VIB (groupe du molybdène) et VIII (groupe du cobalt et du nickel) (tableau américain).

Ledit catalyseur possède les propriétés physiques suivantes :

– une surface spécifique comprise entre 100 et 350 m$^2$/g et de préférence comprise entre 120 et 250 m$^2$/g,

– un volume poreux compris entre 0,5 et 2 cm$^3$/g et de préférence compris entre 0,6 et 1,3 cm$^3$/g.

Le catalyseur contient, sous forme libre ou combinée, outre le support, rapporté au poids total du catalyseur, de 0,01 à 25% en poids, calculé en élément, d'au moins un métal choisi dans les Groupes VB, VIB et VIII du tableau périodique des éléments.

Le catalyseur peut ne contenir que de faibles teneurs en métaux, par exemple de 0,01 à 0,7%, comme indiqué dans le brevet français n° 2.570.385, si on désire que le catalyseur n'ait qu'une fonction démétallisante.

Il peut contenir une proportion plus élevée, par exemple 5 à 10% en poids de molybdène et de 2,5 à 8% en poids de nickel comme revendiqué par exemple dans le brevet français n° 2.598.632, si on désire que le catalyseur ait, outre cette fonction démétallisante, une fonction convertissante, l'une des caractéristiques des catalyseurs revendiqués par ledit brevet ayant en outre un spectre particulier quand on les étudie par microsonde RAMAN.

D'autres catalyseurs qui peuvent être utilisés sont ceux décrits dans le brevet français n° 2.617.498 au nom du Demandeur, constitués d'une pluralité d'agglomérats juxtaposés formés chacun d'une pluralité de plaquettes aciculaires, les plaquettes de chaque agglomérat étant orientées généralement radialement les unes par rapport aux autres et par rapport au centre de l'agglomérat.

L'opération d'hydrodémétallisation peut s'effectuer dans les conditions suivantes :

– température comprise entre 300 et 450°C,

– pression comprise entre 2,5 et 25 mégapascals,

– rapport volumique $\dfrac{\text{hydrogène}}{\text{hydrocarbures}}$ compris entre 50 et 3000 normaux-litres/litre,

– vitesse volumique horaire de la charge, mesurée à l'état liquide, de préférence comprise entre 0,1 et 5 (la vitesse volumique horaire étant le volume de liquide passant par heure sur une unité de volume de catalyseur).

Préalablement aux opérations d'hydrodémétallisation des charges d'hydrocarbures, il peut être avantageux de présulfurer le catalyseur en présence d'hydrogène, par des procédés connus; en général, on monte la température jusqu'à environ 350 à 400°C, en faisant passer sur le catalyseur des composés susceptibles de libérer du soufre, tels que les mélanges d'hydrogène et de sulfure d'hydrogène, des mercaptans ou du sulfure de carbone, ou même un gazole contenant du soufre.

Le procédé d'hydrodémétallisation peut être mis en oeuvre en utilisant un seul lit de catalyseur mobile, fixe ou expansé, comme décrit dans le brevet français n° 2.538.814 au nom du Demandeur.

Dans une forme préférée de mise en oeuvre du procédé d'hydrodémétallisation décrite dans le brevet français n° 2.617.498 au nom du Demandeur, on fait passer l'effluent du procédé d'hydroviscoréduction avec de l'hydrogène à travers au moins deux lits distincts de catalyseur, le premier lit étant formé de particules de diamètre moyen équivalent de 2,5 à 6 mm et le second lit de particules de diamètre moyen équivalent de 0,5 à 2,5 mm.

Selon un mode encore préféré de mise en oeuvre du procédé d'hydrodémétallisation, la seconde étape est mise en oeuvre avec une succession de lits utilisant trois catalyseurs de granulométrie différente :

1er lit : 10 à 30% en poids du total; particules de 3,6 à 4,5 mm de diamètre,

2ème lit : 10 à 30% en poids du total; particules de 2,5 à 3,5 mm de diamètre,

soit 1er et 2ème lits : 20 à 40% en poids du total,

3ème lit et éventuellement 4ème lit : le complément à 100%, soit 60-80%; particules 0,7 à 2 mm de diamètre.

La 1er lit est de préférence un lit mobile, c'est-à-dire que le catalyseur est soutiré périodiquement. Ainsi, les restes catalytiques du procédé d'hydroviscoréduction piégés par le catalyseur peuvent être évacués ce qui évite le bouchage du lit.

Les autres lits sont des lits fixes.

A l'issue du procédé 2) d'hydrodémétallisation, l'effluent dudit procédé est conduit, mélangé à de l'hydrogène, sur un catalyseur d'hydrodésulfuration comprenant un support minéral réfractaire, de l'alumine par exemple et sous forme libre ou combinée, du molybdène et du nickel et/ou du cobalt.

Le catalyseur possède les propriétés physiques suivantes :

– une surface spécifique comprise entre 150 et 350 m²/gramme, de préférence entre 200 et 350 m²/gramme,

– un volume poreux compris entre 0,7 et 2 cm³/gramme, de préférence entre 0,7 et 1,2 cm³/gramme.

Ils peuvent contenir :

a) sous forme libre ou combinée, de 0,5 à 30% en poids, rapporté au poids total du catalyseur, de molybdène,

b) sous forme libre ou combinée, de 0,5 à 10% en poids, rapporté au poids total du catalyseur, d'au moins un métal choisi dans le groupe constitué par le nickel et le cobalt.

Il peut s'agir par exemple des catalyseurs revendiqués dans les brevets français n° 2.560.389 ou 2.598.631.

Les conditions opératoires du procédé d'hydrodésulfuration sont sensiblement les mêmes que celles du procédé d'hydrodémétallisation.

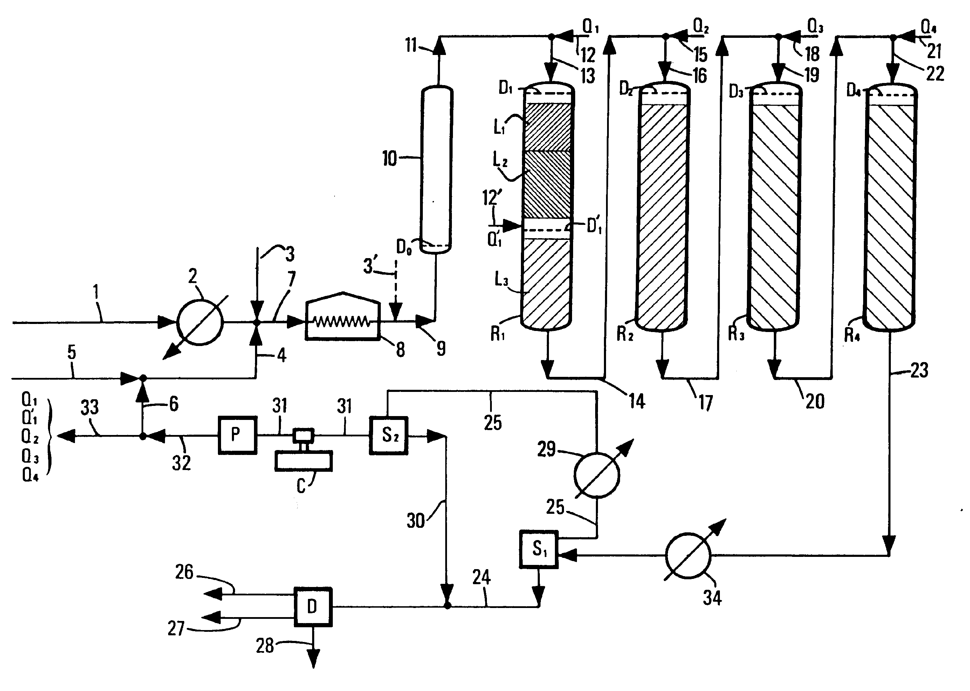

La figure unique jointe illustre, à titre non limitatif, une forme de mise en oeuvre du procédé intégré d'hydrotraitement d'une charge d'hydrocarbure combinant les procédés :

1/ d'hydroviscoréduction catalytique selon l'invention,

2/ d'hydrodémétallisation catalytique,

3/ d'hydrodésulfuration catalytique.

En référence à la figure, la charge d'hydrocarbures à traiter est introduite par la ligne 1 dans l'unité mettant en oeuvre le procédé intégré d'hydrotraitement. Après préchauffage dans le réchauffer 2, elle est mélangée avec du catalyseur introduit par la ligne 3 et avec un gaz riche en hydrogène introduit par la ligne 4, mélange de gaz d'appoint provenant de la ligne 5 et de gaz recyclé provenant de la ligne 6. Le mélange de charge, gaz et catalyseur, est introduit par la ligne 7 dans un four 8.

Dans le four, le mélange est porté à une température d'au moins 330°C, habituellement de 330 à 500°C, de préférence de 350 à 450°C.

L'effluent sortant du four 8 par la ligne 9 est conduit dans le maturateur 10 via le dispositif de distribution Do.

Le catalyseur d'hydroviscoréduction peut également être introduit après le four 8 par la ligne 3'. Il peut l'être également par les lignes 3 et 3'.

Le temps de séjour de l'effluent dans le maturateur est d'environ 5 minutes à 16 heures, de préférence d'environ 10 minutes à 4 heures.

La pression totale est d'environ 3 à 30 mégapascals, de préférence de 8 à 20 mégapascals.

La température est d'environ 350 à 500°C, de préférence d'environ 350 à 450°C.

Le rapport volumique $\dfrac{\text{hydrogène}}{\text{hydrocarbures}}$ est compris entre 100 et 5000 et de préférence entre 150 et 2000 normaux litres/litre.

L'effluent sortant du maturateur 10 par la ligne 11 va subir des traitements d'hydrodémétallisation et d'hydrodésulfuration dans successivement quatre réacteurs :

– deux réacteurs d'hydrodémétallisation R1 et R2,

– deux réacteurs d'hydrodésulfuration R3 et R4.

Dans le premier réacteur R1 sont disposés trois lits L1, L2 et L3 d'un catalyseur de démétallisation dont le support d'alumine est de type aciculaire (voir brevet français n° 2.617.498) contenant environ 14% en poids d'oxyde de molbydène $MoO_3$ et 3% en poids d'oxyde de nickel NiO.

Les différents lits diffèrent par la granulométrie du catalyseur qui se trouve sous la forme de billes de :

– 0,42 cm de diamètre pour le 1er lit,

– 0,28 cm de diamètre pour le 2ème lit,

– 0,18 cm de diamètre pour le 3ème lit.

Le réacteur R1 est équipé de deux dispositifs de distribution D1 et D′1, le dispositif D1 étant disposé en tête du réacteur et le dispositif D′1 entre le deuxième et le troisième lit.

Le réacteur R1 est équipé également de dispositifs de trempe Q1 et Q′1. Le fluide de trempe, de préférence de l'hydrogène froid, arrive par les lignes 12 et 12′, de préférence juste au dessus des plateaux de distribution.

Le mélange d'hydrogène de la ligne 12 et de l'effluent de la ligne 11 est introduit par la ligne 13 dans le réacteur R1.

Le lit L1 est un lit mobile, c'est-à-dire que le catalyseur est soutiré périodiquement. Ainsi, comme il a été indiqué précédemment, les restes catalytiques du procédé d'hydroviscoréduction peuvent être évacués, ce qui évite le bouchage des lits. Les dispositifs de soutirage et d'appoint de catalyseurs n'ont pas été représentés dans un but de simplification.

Les lits L2 et L3 sont des lits fixes.

La température dans le réacteur R1 est de préférence inférieure à 435°C, la vitesse volumique horaire globale comprise de préférence entre 0,8 et 2, la pression étant limitée à celle du maturateur aux pertes de charge près.

A sa sortie du réacteur R1 par la ligne 14, l'effluent dudit réacteur est conduit par la ligne 16 après addition par la ligne 15 d'un fluide de trempe, de préférence de l'hydrogène froid, dans un second réacteur d'hydrodémétallisation R2 équipé d'un dispositif de trempe Q2.

Le réacteur R2, équipé d'un dispositif de distribution D2, contient un catalyseur identique à celui du 3ème lit L3 du réacteur R1. Le catalyseur est disposé en lit fixe.

La température dans le réacteur R2 est de préférence comprise entre 390 et 430°C, la pression étant limitée à celle du maturateur aux pertes de charge près.

A sa sortie du réacteur R2 par la ligne 17, l'effluent dudit réacteur est conduit par la ligne 19 après addition par la ligne 18 d'un fluide de trempe, de préférence de l'hydrogène froid, dans un premier réacteur d'hydrodésulfuration R3 équipé d'un dispositif de trempe Q3.

Le réacteur R3 contient, disposé en lit fixe, un catalyseur d'hydrodésulfuration contenant 15% environ en poids d'oxyde de molybdène $MoO_3$ et 3% en poids d'oxyde de nickel déposés sur de l'alumine.

La température dans le réacteur R3 est comprise entre 370°C et 430°C et de préférence entre 380°C et 420°C, à une température moyenne et à une température maximale de 10 à 15°C, plus basse que dans les deux premiers réacteurs R1 et R2.

La pression est comme dans les réacteurs R1 et R2, limitée à celle du maturateur aux pertes de charge près.

A sa sortie du réacteur R3, par la ligne 20, l'effluent dudit réacteur est conduit par la ligne 22 après addition par la ligne 21 d'un fluide de trempe, de préférence de l'hydrogène froid, dans un second réacteur d'hydrodésulfuration R4 équipé d'un dispositif de trempe Q4.

Le réacteur R4 contient le même catalyseur que le réacteur R3 et les conditions opératoires sont identiques.

Pour minimiser les pertes de charge dans l'ensemble des réacteurs R1, R2, R3 et R4, on peut avantageusement disposer en parallèle les réacteurs R3 et R4 plutôt qu'en série comme représenté sur la figure.

Pour les charges où la teneur en métaux (Ni, V, Fe, Na) et en polluants (C, $SiO_2$, $Al_2$, $Al_2O_3$) est supérieure à 250 ppm en poids entraînant une durée de cycle des catalyseurs du réacteur R1 inférieure à 6 mois, on peut installer en parallèle deux réacteurs identiques R1 et R′1 l'un en attente, l'autre en opération et éventuellement deux séries de réacteur (R1 + R2) et (R'1 + R'2) l'une en attente, l'autre en opération pour que l'unité, dans son ensemble, puisse marcher sans arrêt durant une année.

Ces dispositions permettent également d'être à peu près certain que le bouchage des lits catalytiques par les restes catalytiques provenant du procédé d'hydroviscoréduction sera évité.

A sa sortie du réacteur R4, l'effluent sortant dudit réacteur est conduit par la ligne 23, après passage dans un réfrigérant 34, dans un séparateur chaud S1.

On recueille à la sortie du séparateur S1 :

– une fraction liquide par la ligne 24,

– une fraction gazeuse par la ligne 25.

La fraction liquide est conduite dans une tour de distillation D.

On recueille à la sortie de ladite tour :

– une fraction légère par la ligne 26,

– une fraction lourde par la ligne 27,

– un résidu par la ligne 28.

La fraction gazeuse de la ligne 25 est conduite après passage dans un réfrigérant 29 dans un séparateur froid S2 qui sépare :

– une fraction liquide qui est conduite par la ligne 30 à la ligne 24 et à la distillation D,

– une fraction gazeuse hydrogénée qui, par la ligne 31, est conduite par l'intermédiaire du compresseur C à une étape de purification P impliquant un traitement aux amines et éventuellement un lavage au gazole du gaz hydrogéné.

Le gaz hydrogéné purifié et reconcentré en hydrogène recueilli par la ligne 32 peut être en partie mélangé au gaz d'appoint par la ligne 6 ou redistribué vers les divers dispositifs de trempe par la ligne 33.

Les exemples 1 à 13 concernent la préparation de compositions catalytiques selon l'invention utilisables dans le procédé d'hydroviscoréduction catalytique selon l'invention ainsi que de compositions témoins et des essais d'hydroviscoréduction à l'aide de ces compositions.

L'exemple 14 concerne des essais d'hydrotraitement selon le procédé d'hydrotraitement intégré incluant le procédé d'hydroviscoréduction catalytique selon l'invention à l'aide de compositions préparées dans les exemples précédents.

EXEMPLE 1

On prépare un concentrat d'une composition catalytique (A) suivant l'invention comme suit. On dissout 200 g d'acide phosphomolybdique, de formule 12 Mo $O_3$, $PO_4$ $H_3$, 29 $H_2O$, à 49 % en poids de molybdène, vendu par la société PROLABO, dans 909 g d'isopropanol. La solution alcoolique d'acide phosphomolybdique est introduite dans un réacteur en acier inoxydable muni d'un système d'agitation et contenant un mélange, maintenu à 150 °C, de 15760 g d'une huile de coupe légère (en anglais Light Cycle Oil ou LCO), 764 g d'un résidu sous vide de pétrole d'origine Arabe Lourd SAFANIYA et 545 g de polysulfure TPS 32 de la société ELF AQUITAINE (Ditertiododecylpentasulfure). Le mélange est maintenu à 150 °C sous balayage d'hydrogène sensiblement pur et sous agitation constante pendant toute la durée de l'addition (environ 60 minutes) de la solution d'acide phosphomolybdique, puis on continue l'agitation et le balayage d'hydrogène pendant 45 minutes supplémentaires à la température de 150 °C. Le mélange ainsi préparé contient 0,53 % en poids de molybdène (poids de métal) et le rapport pondéral molybdène sur asphaltènes est égal à 1,20. Ce mélange est ensuite porté à 390 °C sous une pression d'hydrogène de 10 MPa sous agitation constante et on maintient ces conditions pendant 30 minutes. Le produit ainsi obtenu constitue un concentrat d'une composition catalytique A, selon l'invention, contenant de très fines particules solides en suspension. La coupe LCO utilisée dans la préparation de la composition catalytique A est une coupe provenant du cracking catalytique en lit fluidisé (FCC) ayant un point initial (selon la norme de distillation ASTM D 1160) de 160 °C et un point final de 341 °C, une viscosité à 50 °C de 2,15 mPa x s et une densité à 20 °C de 0,996. Cette coupe ne contient pas d'insoluble au n-heptane.

Le résidu sous vide d'origine SAFANIYA a une densité à 20 °C de 1,022, une viscosité à 50 °C de 160 000 mPa x s, une teneur en asphaltènes insolubles au n-heptane de 10,7 % en poids, et 89 % en poids de ce résidu distille à une température supérieure à 500 °C.

Un échantillon de 20 g de la composition catalytique A est filtré sur un filtre millipore de 0,2 micron. Le solide est lavé au toluène, puis séché sous azote à 120 °C. On obtient ainsi 0,56 g d'un solide contenant 18,7 % en poids de molybdène et 22 % en poids de soufre.

EXAMPLE 2 (Comparaison)

On prépare un concentrat d'une composition catalytique (B) en suivant le mode opératoire décrit dans l'exemple 1 mais en remplacant le polysulfure organique par 545 g de coupe LCO. L'introduction de la solution d'acide phosphomolybdique est effectuée sous balayage d'hydrogène pendant 30 minutes puis continuée pendant 30 minutes en faisant barboter à 150 °C un courant de gaz contenant de l'hydrogène et de l'hydrogène sulfuré au lieu d'hydrogène sensiblement pur, la teneur en $H_2S$ étant de 13,6 % en volume et le débit de gaz étant fixé à 20 litres par minute. Le barbotage du gaz contenant $H_2 + H_2S$ est poursuivi 15 minutes puis remplacé par un balayage à l'aide d'hydrogène sensiblement pur pendant 30 minutes. La quantité de soufre introduite de cette manière est identique à celle introduite dans l'exemple 1 à l'aide de TPS 32. On porte ensuite la solution à 390 °C sous une pression d'hydrogène de 10 MPa et sous agitation pendant 30 minutes. Le produit ainsi obtenu constitue un concentrat d'une composition catalytique B, non conforme à la présente invention, contenant de fines particules solides en suspension.

EXEMPLE 3

On prépare un concentrat d'une composition catalytique (C) selon l'invention en suivant le mode opératoire décrit dans l'exemple 1 mais en employant 4582 g de résidu sous vide SAFANIYA et 11945 g de LCO. Le rapport pondéral molybdène sur asphaltènes est alors de 0,2 et la teneur en molybdène est de 0,53 % en poids de métal.

EXEMPLE 4 (comparatif)

On prépare un concentrat d'une composition catalytique (D) en suivant le mode opératoire décrit dans l'exemple 1 mais en employant 30545 g de résidu sous vide SAFANIYA et pas de LCO. Le rapport pondéral molybdène sur asphaltènes est alors de 0,03 et la teneur en molybdène est de 0,3 % en poids de métal.

EXEMPLE 5(comparatif)

On prépare un concentrat d'une composition catalytique (E) en suivant le mode opératoire décrit dans l'exemple 1 mais en employant 76 g de résidu sous vide SAFANIYA et 16541 g de LCO. Le rapport pondéral molybdène sur asphaltènes est alors de 12 et la teneur en molybdène est de 0,53 % en poids de métal.

EXEMPLE 6(comparaison)

On prépare un concentrat d'une composition catalytique (F) en suivant le mode opératoire décrit dans l'exemple 1 mais en opérant au cours du chauffage à 150 °C pendant 105 minutes sous balayage d'azote.

EXEMPLE 7 à 12

L'activité catalytique des concentrats de compositions catalytiques A à F préparés dans les exemples 1 à 6 est testée dans un autoclave PROLABO de 250 cm³ en acier inoxydable agité par secousses dans lequel on introduit 50 g de brut étêté de BOSCAN ayant les caractéristiques données ci-après (Tableau 1) et une quantité de concentrat de composition catalytique telle que la teneur en molybdène soit de 100 ppm en poids par rapport à la charge.

L'autoclave est balayé à l'hydrogène puis pressurisé, à température ambiante, sous une pression de 10 MPa avec un mélange hydrogène-hydrogène sulfuré contenant 95 % en volume d'hydrogène et 5 % en volume d'hydrogène sulfuré.

On chauffe l'autoclave agité de manière à porter la température à 430 °C au bout d'une heure. On maintient cette température constante pendant 30 minutes puis on refroidit rapidement et on mesure la pression après retour à température ambiante.

L'autoclave est ensuite dépressurisé. Les gaz sont mesurés dans un compteur et analysés par chromatographie en phase gazeuse.

Le milieu réactionnel est dilué au toluène, filtré sur un filtre millipore de 0,2 micron. Les solides sont lavés au toluène chaud (80 °C). Le filtrat et la solution toluénique de lavage sont mélangés puis évaporés sous vide. Le résidu d'évaporation constitue l'effluent total sur lequel on détermine les pourcentages de soufre, les asphaltènes $C_5$ et $C_7$ et les métaux (nickel et vanadium).

Les solides récupérés par filtration sont analysés pour connaître la composition en éléments C, H, N, S, Ni, V, Mo.

La quantité de coke formée au cours d'un essai est calculée par rapport à la charge à partir du pourcentage de carbone dans les insolubles au toluène récupérés par filtration.

Le tableau 2 rassemble les résultats obtenus.

On constate que les compositions catalytiques A et C, exemples 7 et 9 selon l'invention, permettent d'obtenir des taux d'élimination de soufre, asphaltènes et métaux plus élevés et une formation de coke plus faible que ce que l'on obtient avec les compositions catalytiques non conformes à l'invention B, D, E et F, exemples 8, 10, 11 et 12.

## TABLEAU 1

### CARACTERISTIQUES DU BRUT DE BOSCAN ETETE

| | | |
|---|---|---|
| Densité à 20 °C | | 1,002 |
| Viscosité à 50 °C | mPa x s | 6535 |
| Viscosité à 100 °C | mPa x s | 239 |
| Soufre | % poids | 5,3 |
| Azote | ppm poids | 5600 |
| Carbone Conradson | % poids | 15,3 |
| Asphaltènes $C_5$ | % poids | 20,3 |
| Asphaltènes $C_7$ | % poids | 12,8 |
| Nickel | ppm poids | 100 |
| Vanadium | ppm poids | 1040 |
| Carbone | % poids | 84,1 |
| Hydrogène | % poids | 10,3 |

## TABLEAU 2

| EXEMPLE | 7 | 8 | 9 | 10 | 11 | 12 |
|---|---|---|---|---|---|---|
| COMPOSITION CATALYTIQUE | A | B* | C | D* | E* | F* |
| TAUX D'ELIMINATION % Pds | | | | | | |
| Soufre | 30 | 25 | 29 | 28 | 23 | 20 |
| Asphaltènes $C_5$ | 44 | 38 | 42 | 40 | 35 | 32 |
| Asphaltènes $C_7$ | 36 | 31 | 38 | 32 | 30 | 28 |
| Métaux | 17 | 12 | 16 | 15 | 10 | 10 |
| % poids coke formé par rapport au poids de la charge | 0,2 | 0,25 | 0,2 | 0,30 | 0,32 | 0,35 |
| Conversion 500° $C^+$ | 39,5 | 29,5 | 40,5 | 30 | 28 | 28,5 |

\* Exemples de comparaison

La conversion 500°$C^+$ est la conversion de la fraction de la charge dont le point d'ébullition est supérieur à 500° C.

### EXEMPLE 13

On prépare un concentrat d'une composition catalytique (G) suivant l'invention en suivant le mode opératoire décrit dans l'exemple 1 mais en utilisant le TPS 37 (ditertiononylpentasulfure) à la place du TPS 32.

L'activité catalytique du concentrat de la composition catalytique G est testée en suivant le mode opératoire décrit dans les exemples 7 à 12. Les résultats obtenus avec la composition catalytique G sont sensiblement les mêmes que ceux obtenus avec la composition catalytique A.

### EXEMPLE 14

On effectue dans une installation pilote semblable à celle représentée sur la figure des essais de procédé intégré d'hydrotraitement d'une charge d'hydrocarbures combinant les procédés :

1/ d'hydroviscoréduction catalytique (selon l'invention ou témoin),

2/ d'hydrodémétallisation catalytique,

3/ d'hydrodésulfuration catalytique.

La charge est un brut étêté dont les caractéristiques sont données dans le tableau 1 ci-dessus.

Les essais ont été réalisés en utilisant lors de l'hydroviscoréduction catalytique les compositions catalytiques A, B et C préparées dans les exemples 1, 2 et 3.

La pression dans le maturateur est de 14,5 mégapascal et la perte de charge dans l'unité déterminée entre l'entrée et la sortie du compresseur de recyclage (C sur la figure) est de 0,75 mégapascal.

Les autres conditions opératoires figurent dans le tableau 3 ci-après :

TABLEAU 3

| . | MATURATEUR (10) | R1 | R2 | R3 | R4 |
|---|---|---|---|---|---|
| t séjour (h) | 0,33 | 1 | 1 | 1 | 1 |
| $H_2$/HC (1/1) | 550 | 670 | 790 | 810 | 930 |
| T entrée ° C | 432 | 385 | 400 | 380 | 380 |
| T sortie ° C | 418 | 405 | 415 | 390 | 390 |

Les caractéristiques des catalyseurs utilisés dans les réacteurs R1, R2, R3 et R4 figurent dans le tableau 4 ci-après :

TABLEAU 4

| CATALYSEUR | AF | BF | CF | EF |
|---|---|---|---|---|
| SUPPORT-Nature | $Al_2O_3$ | $Al_2O_3$ | $Al_2O_3$ | $Al_2O_3$ ($\gamma c$) |
| Structure | aciculaire | aciculaire | aciculaire | non aciculaire |
| acidité (joules/g) | 24 | 23 | 25 | 41 |
| diamètre équivalent (cm) | 0,42 | 0,28 | 0,18 | 0,125 |
|  | billes | billes | billes | extrud. |
| CATALYSEUR | | | | |
| surface ($m^2$/g) | 142 | 138 | 147 | 219 |
| volume poreux total ($cm^3$/g) | 0,96 | 0,93 | 0,93 | 0,91 |
| volume poreux > 1 $\mu$m | 0,22 | 0,18 | 0,17 | 0,03 |
| volume poreux > 0,1 $\mu$m | 0,34 | 0,33 | 0,32 | 0,08 |
| volume poreux < 10 nm | 0,07 | 0,09 | 0,11 | 0,13 |
| $MoO_3$ % poids | 14,2 | 14,3 | 14,3 | 14,8 |
| NiO % poids | 2,9 | 3,1 | 3,0 | 3,1 |
| densité de lit | 0,55 | 0,57 | 0,57 | 0,56 |

La façon dont sont chargés les réacteurs figure dans le tableau 5 ci-après :

TABLEAU 5

| RESULTATS | ESSAI 1 | ESSAI 2 (compa- ratif) | ESSAI 3 |
|---|---|---|---|
| Chargement des réacteurs : | | | |
| R1 | <====== | 20% AF | ======> |
| | <====== | 30% BF | ======> |
| | <====== | 50% CF | ======> |
| R2 | <====== | CF | ======> |
| R3 | <====== | EF | ======> |
| R4 | <====== | EF | ======> |
| Composition catalytique pour l'hydroviscoréduction | A | B | C |

Pour l'hydroviscoréduction, la quantité de composition catalytique utilisée est telle qu'il y a 100 ppm de molybdène par rapport à la charge.

Les résultats sont exprimés en donnant la conversion de la fraction de la charge dont le point d'ébullition est supérieur à 500°C (ci-après 500 °C+).

Conversion 500°C + en % poids

Essai 1    77
Essai 2    66
Essai 3    76

Comme les taux d'élimination des asphaltènes, du soufre et des métaux lors de l'hydroviscoréduction catalytique dans les essais 1 et 3 sont meilleurs, la durée de vie des catalyseurs d'hydrodémétallisation et d'hydrodésulfuration est améliorée.

Cet exemple montre bien l'intérêt du procédé intégré utilisant le procédé d'hydroviscoréduction catalytique selon l'invention.

**Revendications**

1. Composition catalytique comprenant au moins un sulfure d'au moins un métal choisi parmi les métaux des groupes VI B, VII B et VIII de la classification périodique des éléments caractérisée en ce qu'elle est obtenue par une méthode qui comprend les étapes suivantes :

a) on soumet à un traitement thermique à une température de 80 à 250 °C pendant une durée de 0,1 à 24 heures, sous atmosphère réductrice d'un gaz contenant de l'hydrogène, le mélange obtenu par la mise en contact, dans un ordre quelconque, d'au moins un composé autre qu'un sulfure, d'au moins un métal choisi parmi les métaux des groupes VI B, VII B et VIII, avec une charge hydrocarbonée contenant des asphal-

13

EP 0 343 045 B1

tènes et avec au moins un polysulfure organique de formule $R^1 \{S\}_n R^2$ dans laquelle $R^1$ et $R^2$ identiques ou différents, représentent chacun un radical hydrocarboné et n est un nombre entier de 2 à 20, les quantités du composé de métal et des asphaltènes étant telles que le rapport pondéral métal sur asphaltènes soit de 0,05 : 1 à 10 : 1 et la quantité de polysulfure organique employée étant suffisante pour introduire une quantité de soufre au moins égale à la quantité de soufre nécessaire à la transformation sensiblement complète de la majeure partie de la quantité de métal présente en un composé métallique sulfuré précurseur catalytique, et,

b) on chauffe le produit issu de l'étape (a) en présence d'un gaz contenant de l'hydrogène sous une pression partielle d'hydrogène de 0,5 à 20 MPa, à une température de 260 à 450 °C pendant une durée de 0,1 à 24 heures.

2. Composition catalytique selon la revendication 1 caractérisée en ce que le composé de métal employé dans l'étape (a) est choisi dans le groupe formé par les oxydes, les sels d'acides organiques, les polyacides et les sels de polyacides des métaux.

3. Composition catalytique selon l'une des revendications 1 et 2 caractérisée en ce que au cours de l'étape (a) le composé de métal est employé sous forme d'une solution dans un solvant choisi dans le groupe formé par l'eau, les solvants organiques et les mélanges eau-solvants organiques ou d'une émulsion dans un mélange eau-solvant organique.

4. Composition catalytique selon l'une des revendications 1 et 2 caractérisée en ce que au cours de l'étape (a) le composé de métal est employé sous forme d'une solution ou d'une émulsion dans un mélange eau-solvant organique, ledit solvant organique contenant au moins un alcool ayant de 3 à 18 atomes de carbone dans sa molécule.

5. Composition catalytique selon l'une des revendications 1 à 4 dans laquelle le métal est choisi dans le groupe formé par le molybdène, le nickel et le cobalt.

6. Composition catalytique selon l'une des revendications 1 à 5 caractérisée en ce que, au cours de l'étape (a), le composé de métal employé est choisi dans le groupe formé par les bleus de molybdène, les sels de molybdène d'acides organiques, l'acide phosphomolybdique, et les sels de l'acide phosphomolybdique.

7. Procédé d'hydroviscoréduction catalytique d'une charge d'hydrocarbures caractérisé en ce qu'il comprend les étapes suivantes :

a) On mélange la charge à traiter avec un gaz contenant de l'hydrogène en quantité suffisante pour effectuer la réaction d'hydrovis coréduction et on porte le mélange à une température d'au moins 330 °C, le rapport volumique hydrogène/hydrocarbures étant compris entre 100 et 5000,

b) On introduit dans le mélange hydrogène-charge d'hydrocarbures une quantité suffisante, pour obtenir une teneur en métaux dans la charge à traiter de 10 à 2000 ppm en poids par rapport au poids de la charge, d'une composition catalytique obtenue par une méthode qui comprend les étapes suivantes :

1) on soumet à un traitement thermique à une température de 80 à 250 °C pendant une durée de 0,1 à 24 heures, sous atmosphère réductrice d'un gaz contenant de l'hydrogène, le mélange obtenu par la mise en contact, dans un ordre quelconque, d'au moins un composé autre qu'un sulfure, d'au moins un métal choisi parmi les métaux des groupes VI B, VII B et VIII de la classification périodique des éléments, avec une charge hydrocarbonée contenant des asphaltènes et avec au moins un polysulfure organique de formule $R^1 \{S\}_n R^2$ dans laquelle $R^1$ et $R^2$ identiques ou différents, représentent chacun un radical hydrocarboné et n est un nombre entier de 2 à 20, les quantités du composé de métal et des asphaltènes étant telles que le rapport pondéral métal sur asphaltènes soit de 0,05 : 1 à 10 : 1 et la quantité de polysulfure organique employée étant suffisante pour introduire une quantité de soufre au moins égale à la quantité de soufre nécessaire à la transformation sensiblement complète de la majeure partie de la quantité de métal présente en un composé métallique sulfuré précurseur catalytique, et,

2) on chauffe le produit issu de l'étape (b) en présence d'un gaz contenant de l'hydrogène sous une pression partielle d'hydrogène de 0,5 à 20 MPa, à une température de 260 à 450 °C pendant une durée de 0,1 à 24 heures, et

c) On soumet le produit issu de l'étape (b) à des conditions d'hydroviscoréduction pendant une durée suffisante pour effectuer l'hydroviscoréduction de la charge à traiter, le temps de séjour variant de 5 minutes à 16 heures.

8. Procédé selon la revendication 7 dans lequel, au cours de l'étape (a) le mélange hydrogène-charge d'hydrocarbures à traiter est porté à une température d'environ 350 à 450 °C et la quantité d'hydrogène introduite par rapport à la charge est en volume, mesurée à température et pression normale, de 100 : 1 à 5000 : 1.

9. Procédé selon la revendication 7 ou 8 dans lequel la quantité de métal introduit à l'aide de la composition

**14**

catalytique dans l'étape (b) est de 25 à 500 ppm en poids par rapport à la charge à traiter.

10. Procédé selon l'une des revendications 7 à 9 caractérisée en ce que la composition catalytique comprend un métal choisi dans le groupe formé par le molybdène, le nickel et le cobalt.

11. Procédé selon l'une des revendications 7 à 10 caractérisée en ce que le composé de métal utilisé pour préparer la composition catalytique est choisi dans le groupe formé par les bleus de molybdène, les sels de molybdène d'acides organiques, l'acide phosphomolybdique et les sels de l'acide phosphomolybdique.

12. Procédé intégré d'hydrotraitement selon la revendication 7 d'une charge d'hydrocarbures combinant les procédés suivants :

1. Procédé d'hydroviscoréduction catalytique selon l'une des revendications 7 à 11,
2. Procédé d'hydrodémétallisation catalytique,
3. Procédé d'hydrodésulfuration catalytique.

## Patentansprüche

1. Katalytische Zusammensetzung, die mindestens ein Sulfid mindestens ein Metall, ausgewählt aus Metallen der Gruppen VI B, VII B und VIII des Periodensystems der Elemente, enthält, dadurch gekennzeichnet, daß sie erhalten wird durch ein Verfahren, das folgende Stufen umfaßt:

a) man unterwirft bei einer Temperatur von 80 bis 250°C während einer Dauer von 0,1 bis 24 Stunden unter reduzierender Atmosphäre eines Wasserstoff enthaltenden Gases das Gemisch einer thermischen Be handlung, welches erhalten wurde durch in beliebiger Reihenfolge bewirktes Kontaktieren mindestens einer kein Sulfid darstellenden Verbindung mindestens eines aus den Metallen der Gruppen VI B, VII B und VIII ausgewählten Metalls mit einer Asphaltene enthaltenden Kohlenwasserstoffcharge und mit mindestens einem organischen Polysulfid der Formel $R^1 \{S\}_n R^2$, worin $R^1$ und $R^2$, die gleich oder verschieden sind, jeweils einen Kohlenwasserstoffrest und n eine ganze Zahl von 2 bis 20 bedeuten, wobei die Mengen der Metallverbindung und der Asphaltene so gewählt sind, daß das Gewichtsverhältnis Metall zu Asphaltenen von 0,05 : 1 bis 10 : 1 reicht und die Menge an eingesetztem organischem Polysulfid ausreicht, um eine Menge an Schwefel einzuführen, die mindestens gleich der Menge an Schwefel ist, die zur praktisch vollständigen Überführung des Großteils der Menge an vorliegendem Metall in eine katalytische Metallschwefel-Vorläuferverbindung erforderlich ist, und

b) man erhitzt das in Stufe (a) erhaltene Produkt in Gegenwart eines Wasserstoff enthaltenden Gases unter einem Wasserstoffpartialdruck von 0,5 bis 20 MPa bei einer Temperatur von 260 bis 450°C während einer Dauer von 0,1 bis 24 Stunden.

2. Katalytische Zusammensetzung nach Anspruch 1, dadurch gekennzeichnet, daß die in Stufe (a) eingesetzte Metallverbindung ausgewählt ist aus der Gruppe bestehend aus den Oxiden, den Salzen organischer Säuren, den Polysäuren und den Polysäuresalzen der Metalle.

3. Katalytische Zusammensetzung nach einem der Ansprüche 1 und 2, dadurch gekennzeichnet, daß zur Durchführung der Stufe (a) die Metallverbindung angewandt wird in Form einer Lösung in einem Lösungsmittel, das ausgewählt ist aus der Gruppe bestehend aus Wasser, den organischen Lösungsmitteln und den Gemischen Wasser-organische Lösungsmittel, oder einer Emulsion in einem Gemisch Wasser-organisches Lösungsmittel.

4. Katalytische Zusammensetzung nach einem der Ansprüche 1 und 2, dadurch gekennzeichnet, daß zur Durchführung der Stufe (a) die Metallverbindung angewandt wird in Form einer Lösung oder einer Emulsion in einem Gemisch Wasser-organisches Lösungsmittel, wobei das organische Lösungsmittel mindestens einen Alkohol mit 3 bis 18 Kohlenstoffatomen in seinem Molekül enthält.

5. Katalytische Zusammensetzung nach einem der Ansprüche 1 bis 4, bei der das Metall ausgewählt ist aus der Gruppe bestehend aus Molybdän, Nickel und Kobalt.

6. Katalytische Zusammensetzung nach einem der Ansprüche 1 bis 5, dadurch gekennzeichnet, daß zur Durchführung der Stufe (a) die eingesetzte Metallverbindung ausgewählt ist aus der Gruppe bestehend aus den Molybdänblauprodukten, den Salzen organischer Molybdänsäuren, Phosphormolybdänsäure und den Salzen von Phosphormolybdänsäure,

7. Verfahren zur katalytischen Hydroviscoreduktion einer Kohlenwasserstoffcharge, dadurch gekennzeichnet, daß es die folgenden Stufen umfaßt:

a) man mischt die zu behandelnde Charge mit einem Wasserstoff enthaltenden Gas in einer Menge, die zur Bewirkung der Hydroviscoreduktionsreaktion ausreicht, und man bringt das Gemisch auf eine Temperatur von mindestens 330°C, wobei das Volumenverhältnis Wasserstoff/Kohlenwasserstoffe zwischen 100 und 5000 liegt,

b) man führt in das Gemisch Wasserstoff-Kohlenwasserstoffcharge eine ausreichende Menge, um einen Gehalt an Metallen in der zu behandelnden Charge von 10 bis 2000 Gew.-ppm, bezogen auf das Gewicht der Charge, zu erzielen, einer katalytischen Verbindung ein, die erhalten wurde nach einem Verfahren, das die folgenden Stufen umfaßt:

1) man unterwirft bei einer Temperatur von 80 bis 250°C während einer Dauer von 0,1 bis 24 Stunden unter reduzierender Atmosphäre eines Wasserstoff enthaltenden Gases das Gemisch einer thermischen Behandlung, welches erhalten wurde durch in beliebiger Reihenfolge bewirktes Kontaktieren mindestens einer kein Sulfid darstellenden Verbindung mindestens eines aus den Metallen der Gruppen VI B, VII B und VIII des Periodensystems der Elemente ausgewählten Metalls mit einer Asphaltene enthaltenden Kohlenwasserstoffcharge und mit mindestens einem organischen Polysulfid der Formel

$R^1 (S)_n R^2$, worin $R^1$ und $R^2$, die gleich oder verschieden sind, jeweils einen Kohlenwasserstoffrest und n eine ganze Zahl von 2 bis 20 bedeuten, wobei die Mengen der Metallverbindung und der Asphaltene so gewählt sind, daß das Gewichtsverhältnis Metall zu Asphaltenen von 0,05 : 1 bis 10 : 1 reicht und die Menge an eingesetztem organischem Polysulfid ausreicht, um eine Menge an Schwefel einzuführen, die mindestens gleich der Menge an Schwefel ist, die zur praktisch vollständigen Überführung des Großteils der Menge an vorliegendem Metall in eine katalytische Metall-schwefel-Vorläuferverbindung erforderlich ist, und 2) man erhitzt das in Stufe (a) erhaltene Produkt in Gegenwart eines Wasserstoff enthaltenden Gases unter einem Wasserstoffpartialdruck von 0,5 bis 20 MPa bei einer Temperatur von 260 bis 450°C während einer Dauer von 0,1 bis 24 Stunden, und

c) man unterwirft das in Stufe (b) erhaltene Produkt Hydroviscoreduktionsbedingungen während einer Zeitspanne, die zur Bewirkung der Hydroviscoreduktion der zu behandelnden Charge ausreicht, wobei die Verweilzeit von 5 Minuten bis 16 Stunden variiert.

8. Verfahren nach Anspruch 7, bei dem zur Durchführung der Stufe (a) das Gemisch Wasserstoff-zu behandelnde Kohlenwasserstoffcharge auf eine Temperatur von etwa 350 bis 450°C gebracht wird und die eingeführte Menge an Wasserstoff im Verhältnis zu der Charge, ausgedrückt in Volumen und gemessen bei Normaltemperatur und -druck, 100 : 1 bis 5000 : 1 beträgt.

9. Verfahren nach Anspruch 7 oder 8, bei dem die Menge an in Stufe (b) mit hilfe der katalytischen Verbindung eingeführtem Metall 25 bis 500 Gewichts-ppm, bezogen auf die zu behandelnde Charge, beträgt.

10. Verfahren nach einem der Ansprüche 7 bis 9, dadurch gekennzeichnet, daß die katalytische Verbindung ein Metall enthält, das ausgewählt ist aus der Gruppe bestehend aus Molybdän, Nickel und Kobalt.

11. Verfahren nach einem der Ansprüche 7 bis 10, dadurch gekennzeichnet, daß die zur herstellung der katalytischen Verbindung verwendete Metallverbindung ausgewählt ist aus der Gruppe bestehend aus den Molybdänblauprodukten, den Salzen organischer Molybdänsäuren, Phosphormolybdänsäure und den Salzen von Phosphormolybdänsäure.

12. Hydrobehandlung-Gesamtverfahren nach Anspruch 7 einer Kohlenwasserstoffcharge, das die Kombination folgender Verfahren umfaßt:

1. Katalytisches hydroviscoreduktionsverfahren nach einem der Ansprüche 7 bis 11,
2. Katalytisches hydrodemetallisierungsverfahren,
3. Katalytisches hydrodesulfurierungsverfahren.

## Claims

1. Catalytic composition comprising at least one sulfide of at least one metal selected from the metals of groups VI B, VII B and VIII of the periodic table of elements, characterized in that it is obtained by a method comprising the followings stages :

a) subjecting to a thermal treatment at a temperature ranging from 80 to 250°C for 0.1 to 24 hours, under the globally reducing atmosphere of a gas containing hydrogen, the mixture obtained by contacting, in any order, at least one compound other than a sulfide of at least one metal selected from the metals of groups VI B, VII B and VII, with a hydrocarbon charge containing asphaltenes and with at least one organic polysulfide of the formula $R^1 - (S)_n - R_2$ where $R_1$ and $R^2$ are identical or different, each representing a hydrocarbon radical and n being an integral number from 2 to 20, the amounts of metal compound and of asphaltenes being such that the ratio by weight of metal to asphaltenes ranges from about 0.05 : 1 to 10 : 1 and the amount of organic polysulfide being sufficient for introducing an amount of sulfur at least equal to the amount of sulfur necessary for substantially completely converting the most part of the metal present into a sulfurized metallic compound which is a catalytic precursor, and

EP 0 343 045 B1

b) heating the product resulting from stage (a) in the presence of a gas containing hydrogen under a hydrogen partial pressure ranging from about 0.5 to 20 MPa, at a temperature from about 260 to 450°C for 0.1 to 24 hours.

2. A catalytic composition according to claim 1 characterized in that the metal compound used in stage (a) is selected from the group constituted by the oxides, organic acid salts, polyacids and polyacid salts of the metals.

3. A catalytic composition according to one of claims 1 and 2 characterized in that, during stage (a), the metal compound is utilized in the form of a solution in a solvent selected from the group constituted by water, organic solvents and water-organic solvents mixtures or an emulsion in a water-organic solvent mixture.

4. A catalytic composition according to one of claims 1 and 2 characterized in that, during stage (a), the metal compound is utilized in the form of a solution or an emulsion in a water-organic solvent mixture, said organic solvent containing at least one alcohol with 3 to 18 carbon atoms in its molecule.

5. A catalytic composition according to one of claims 1 to 4 wherein the metal is selected from the group constituted by molybdenum, nickel and cobalt.

6. A catalytic composition according to one of claims 1 to 5 characterized in that, during stage (a), the metal compound that is utilized is selected from the group constituted by the molybdenum blues, organic acid molydbenum salts, phosphomolybdic acid and phosphomolybdic acid salts.

7. Process of catalytic hydrovisbreaking of a hydrocarbon charge comprising the following stages :

a) Mixing the charge to be treated with a gas containing hydrogen in an amount sufficient for carrying out the hydrovisbreaking reaction and bringing the mixture up to a temperature of at least 330°C,

b) introducing into the hydrogen-hydrocarbon charge mixture an amount of a catalytic composition that is sufficient for obtaining a content of metals in the charge to be treated ranging from about 10 to 2,000 ppm by weight in relation to the weight of the charge, said catalytic composition being obtained with a method comprising the following stages :

1) subjecting to a thermal treatment at a temperature ranging from 80 to 250°C for a duration ranging from 0.1 to 24 hours, under the globally reducing atmosphere of a gas containing hydrogen, the mixture obtained by contacting, in any order, at least one compound other than a sulfide of at least one metal selected from the metals of groups VI B, VII B and VIII of the periodic table of elements, with a hydrocarbon charge containing asphaltenes and with at least one organic polysulfide of the formula $R^1$ - $(S)_n$- $R^2$ where $R^1$ and $R^2$ are identical or different, each representing a hydrocarbon radical and n being an integral number from 2 to 20, the amounts of metal compound and of asphaltenes being such that the ratio by weight of metal to asphaltenes ranges from about 0.05 : 1 to 10 : 1 and the amount of organic polysulfide which is utilized being sufficient for introducing an amount of sulfur at least equal to the amount of sulfur necessary for the substantially complete conversion of the most part of the metal present into a sulfurized metallic compound which is a catalytic precursor, and 2) heating the product resulting from stage (b) in the presence of a gas containing hydrogen under a partial hydrogen pressure ranging from about 0.5 to 20 MPa, at a temperature ranging from about 260 to 450°C for 0.1 to 24 hours, and

c) subjecting the product resulting from stage (6) to hydrovisbreaking conditions for a time sufficient for carrying out the hydrovisbreaking of the charge to be treated.

8. A process according to claim 1 wherein, during stage (a), the hydrogen-hydrocarbon charge to be treated is brought up to a temperature ranging from about 350 to 450°C and the amount of hydrogen introduced in relation to the charge ranges, in volume, measured at a standard temperature and pressure, from about 100 ; 1 to 5,000 : 1.

9. A process according to claim 1 or 2 wherein the amount of metal introduced by means of the catalytic composition in stage (b) ranges from 25 to 500 ppm by weight in relation to the charge to be treated.

10. A process according to one of claims 7 to 9 characterized in that the catalytic composition comprises a metal selected from the group constituted by molybdenum, nickel and cobalt.

11. A process according to one of claims 7 to 10 characterized in that the metal compound used for preparing the catalytic composition is selected from the group constituted by the molybdenum blues, the organic acid molybdenum salts, phosphomolybdic acid and phosphomolybdic acid salts.

12. An integrated process for the hydrotreatment according to claim 7 of a hydrocarbon charge combining the following processes :

1. Catalytic hydrovisbreaking process according to one of claims 7 to 11,

2. Catalytic hydrodemetallization process,

3. Catalytic hydrosulfurization process.

17